# FASCICULE DE BREVET EUROPEEN

(11) **EP 2 892 405 B1**
(45) Date de publication et mention de la délivrance du brevet: **02.10.2019**
(21) Numéro de dépôt: 13767036.0
(22) Date de dépôt: 03.09.2013
(51) Int. Cl.: A47J 43/07, A21C 1/02, B01F 7/30, B01F 7/16, B01F 7/00

(54) **APPAREIL DE PRÉPARATION CULINAIRE COMPORTANT UN CROCHET DE PETRISSAGE ENTRAÎNÉ SELON UN MOUVEMENT PLANÉTAIRE**
HAUSHALTSVORRICHTUNG ZUR LEBENSMITTELHERSTELLUNG MIT EINEM HAKEN ZUR TEIGMISCHUNG DURCH PLANETENGETRIEBEBEWEGUNGEN
HOUSEHOLD FOOD PREPARATION APPARATUS COMPRISING A DOUGH-MIXING HOOK DRIVEN IN A PLANETARY MOTION

(30) Priorité: 06.09.2012 FR 1258363
(43) Date de publication de la demande: 15.07.2015
(73) Titulaire: SEB S.A., 69130 Ecully (FR)
(72) Inventeur: BLOND, Laurent, F-21200 Beaune (FR)
(74) Mandataire: Bourrières, Patrice
(86) Numéro de dépôt international: PCT/FR2013/052026
(87) Numéro de publication internationale: WO 2014/037663

(56) Documents cités:
- EP-A2- 1 707 052
- CH-A- 201 168
- CN-U- 202 269 922
- DE-A1-102008 029 369
- FR-A1- 2 954 181

## Description

La présente invention se rapporte au domaine technique général des appareils électroménagers de préparation culinaire comportant une cuve comprenant un fond surmonté d'une paroi périphérique ouverte à son extrémité supérieure, un crochet de pétrissage entrainé en rotation par un moteur selon un mouvement planétaire, le mouvement de rotation du crochet étant composé d'une rotation du crochet sur lui-même autour d'un axe S et autour d'un axe P distinct de l'axe S, et un contre-outil fixé sur une platine entrainée en rotation autour de l'axe P comportant une branche de travail présentant une extrémité inférieure plongeant dans la cuve, le crochet de pétrissage comportant une branche de travail plongeant dans la cuve comprenant une partie inférieure coudée venant à proximité du fond de la cuve et se prolongeant par une partie relevée.

Il est connu, de la demande internationale WO 2011 086291 déposée par la demanderesse, un appareil électroménager de préparation culinaire comprenant une cuve, un crochet de pétrissage plongeant dans la cuve et entrainé en rotation par un moteur selon un mouvement planétaire dans la cuve, et un contre-outil fixé sur une platine rotative comprenant une branche de travail venant à proximité du fond du récipient pour coopérer avec le crochet de pétrissage et successivement étirer, laminer et replier la pâte.

Une telle combinaison entre un crochet de pétrissage et un contre-outil présente l'avantage de permettre un bon pétrissage assurant l'obtention d'une bonne qualité de pâte. Cependant, un tel contre-outil venant à proximité du fond du récipient et de la paroi périphérique présente l'inconvénient de générer des efforts importants qui chargent fortement le moteur. Ainsi, un tel contre-outil ne peut être utilisé que sur un appareil comprenant un moteur suffisamment puissant pour soutenir la charge générée par le travail du contre-outil sans provoquer un échauffement important du moteur pouvant conduire à sa destruction.

Il est également connu du brevet DE 10 2008 029369 un appareil électroménager de préparation culinaire comportant une cuve recevant un crochet de pétrissage entrainé en rotation par un moteur selon un mouvement composé d'une rotation du crochet sur lui-même autour d'un axe incliné et d'un mouvement de rotation autour d'un axe vertical d'une platine. Dans ce document, le crochet comporte une branche de travail plongeant dans la cuve comprenant une partie inférieure coudée venant à proximité du fond de la cuve et se prolongeant par une partie relevée. L'appareil comporte également un contre-outil fixé sur la platine qui comporte une branche de travail présentant une extrémité inférieure plongeant dans la cuve, la hauteur de la branche de travail du contre-outil étant nettement plus faible que la hauteur de la branche de travail du crochet. Cependant, dans ce document le contre-outil a seulement pour fonction d'éviter la remontée de la pâte le long du crochet et ne vient pas cisailler et/ou étirer la pâte de sorte qu'il ne participe pas au pétrissage de cette dernière.

Aussi, un but de la présente invention est de proposer un appareil électroménager de préparation culinaire qui remédie à cet inconvénient, et notamment de proposer un appareil électroménager de préparation culinaire comportant d'un contre-outil travaillant en combinaison avec un crochet de pétrissage pour assurer une bonne qualité de pétrissage sans toutefois générer d'efforts trop importants pour ne pas surcharger le moteur.

A cet effet, l'invention se rapporte à un appareil électroménager de préparation culinaire selon la revendication 1.

Selon encore une autre caractéristique de l'invention, l'extrémité inférieure du contre-outil est située sensiblement à hauteur de l'extrémité du crochet.

Selon une autre caractéristique de l'invention, la hauteur de la partie relevée du crochet représente au moins 20 % de la hauteur h₁ de la branche de travail du crochet.

Selon une autre caractéristique de l'invention, la branche de travail du contre-outil s'étend sensiblement verticalement depuis la platine jusqu'à son extrémité inférieure.

Selon une autre caractéristique de l'invention, l'extrémité inférieure du contre-outil est décalée radialement par rapport à la trajectoire balayée par l'extrémité du crochet.

Selon une autre caractéristique de l'invention, l'extrémité inférieure du contre-outil se trouve à l'extérieur de la trajectoire balayée par l'extrémité du crochet.

Selon une autre caractéristique de l'invention, le contre-outil est légèrement courbé vers l'intérieur de la cuve.

Selon une autre caractéristique de l'invention, dans un plan passant par les axes S et P, la branche de travail du contre-outil s'étend sensiblement symétriquement à la paroi périphérique de la cuve par rapport à l'axe S.

Une telle caractéristique présente l'avantage de permettre l'utilisation d'autres types d'outils de travail que le crochet de pétrissage équipant habituellement les appareils de préparation culinaire, tels un outil mélangeur ou un fouet, sans risque de collisions entre l'outil de travail et le contre-outil. Ainsi, il n'y a pas de risque de détérioration de l'appareil si l'utilisateur oublie de démonter le contre-outil lorsqu'il utilise d'autres types d'outils de travail que le crochet de pétrissage.

Selon une autre caractéristique de l'invention, le contre-outil présente une section transversale allongée selon une direction perpendiculaire à la direction radiale de la cuve, la section transversale présentant un profil avec un bord d'attaque effilé et un bord de fuite épais.

Une telle caractéristique présente l'avantage de permettre un meilleur cisaillage de la pâte.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- les figures 1 et 2 sont des vues de côté d'un appareil de préparation culinaire selon un mode particulier de réalisation de l'invention, le crochet de pétrissage étant respectivement représenté dans une position de croisement et dans une position opposée ;
- la figure 3 est une vue de côté du crochet de pétrissage et du contre-outil représentés seuls en position de croisement ;
- les figures 4 et 5 sont des vues en perspective du crochet de pétrissage et du contre-outil de la figure 3 ;
- la figure 6 représente une section de la branche de travail du contre-outil selon la ligne VI-VI de la figure 3 ;
- la figure 7 est une vue de côté de l'appareil de la figure 1 équipé du contre-outil et d'un outil mélangeur à la place du crochet de pétrissage.

Seuls les éléments nécessaires à la compréhension de l'invention ont été représentés. Pour faciliter la lecture des dessins, les mêmes éléments portent les mêmes références d'une figure à l'autre.

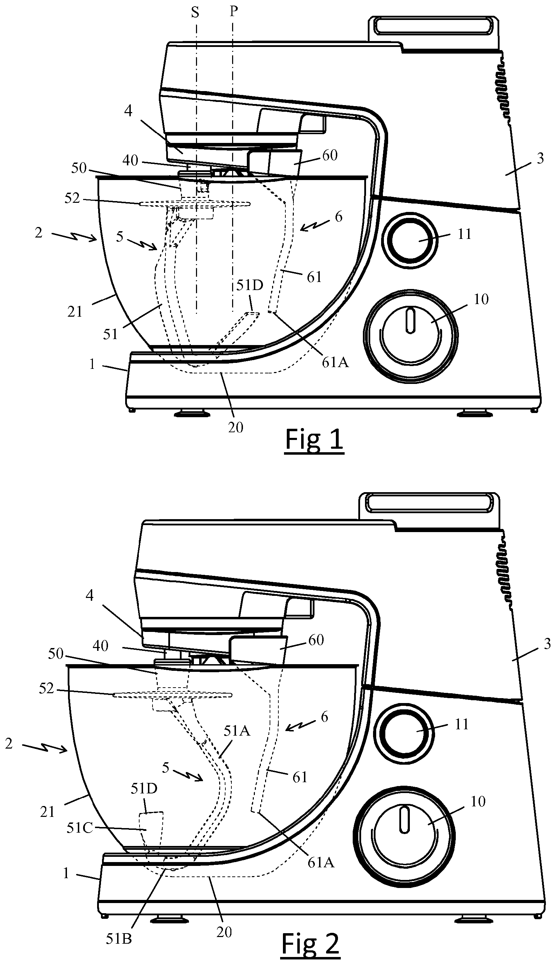

La figure 1 représente un appareil électroménager de préparation culinaire comprenant un socle 1 supportant une cuve 2 et un bras 3 articulé solidaire du socle 1, le bras 3 renfermant un moteur électrique d'une puissance de l'ordre de 900W, non représenté sur les figures, dont la mise en marche et la vitesse sont contrôlées par un bouton de commande 10 disposé sur une face avant du socle 1.

La cuve 2 est montée de manière amovible sur le socle 1 et comporte un fond 20 surmonté d'une paroi périphérique 21 comprenant une extrémité supérieure ouverte par laquelle des ingrédients peuvent être introduits dans la cuve 2. A titre d'exemple, la cuve 2 présente un diamètre de l'ordre de 20 cm et une hauteur de l'ordre de 15 cm pour un volume de l'ordre de quatre litres.

Le bras 3 est, de manière connue en soi, mobile en rotation selon un axe sensiblement horizontal entre une position relevée, non représentée, dans laquelle la cuve 2 peut être facilement retirée du socle 1 et une position de travail, illustrée sur les figures 1 et 2, dans laquelle le bras 3 comprend une extrémité libre s'étendant sensiblement horizontalement au dessus de la cuve 2.

De manière avantageuse, l'appareil comporte un dispositif de verrouillage, non représenté, immobilisant automatiquement le bras 3 lorsque ce dernier atteint la position relevée ou la position de travail, ainsi qu'un bouton de déverrouillage 11, disposé sur la face avant du socle 1, devant être actionné pour permettre le déplacement du bras 3 d'une position à l'autre.

L'extrémité libre du bras 3 comporte, de manière connue en soi, des moyens d'entraînement d'un outil de travail selon un mouvement planétaire, l'outil de travail étant avantageusement constitué d'un crochet 5 de pétrissage en métal tel qu'illustré sur les figures 1 et 2.

Les moyens d'entraînement du crochet 5 comprennent une platine 4 circulaire mobile en rotation autour d'un axe central P de la platine 4 et un entraineur 40 excentré assurant l'entraînement en rotation du crochet 5 sur lui-même, autour d'un axe S, la platine 4 étant préférentiellement entrainée en rotation dans un sens opposé au sens de rotation de l'entraineur 40. Cet ensemble rotatif est relié au moteur par l'intermédiaire d'une chaîne cinématique mettant notamment en oeuvre un train d'engrenage épicycloïdal selon une conception très largement connue de l'homme du métier.

L'appareil comporte également un contre-outil 6 fixé sur la platine 4 en un point disposé sensiblement symétriquement à l'entraineur 40 par rapport à l'axe P de rotation de la platine 4, le contre-outil 6 étant entrainé en rotation en même temps que la platine 4. Le contre-outil 6 est préférentiellement fixé de manière amovible sur la platine 4 et comporte à cet effet une bride de fixation 60 s'engageant autour d'un renflement de la platine 4, le contre-outil 6 comportant une branche de travail 61 plongeant dans la cuve 2 s'étendant sensiblement verticalement depuis la bride de fixation 60.

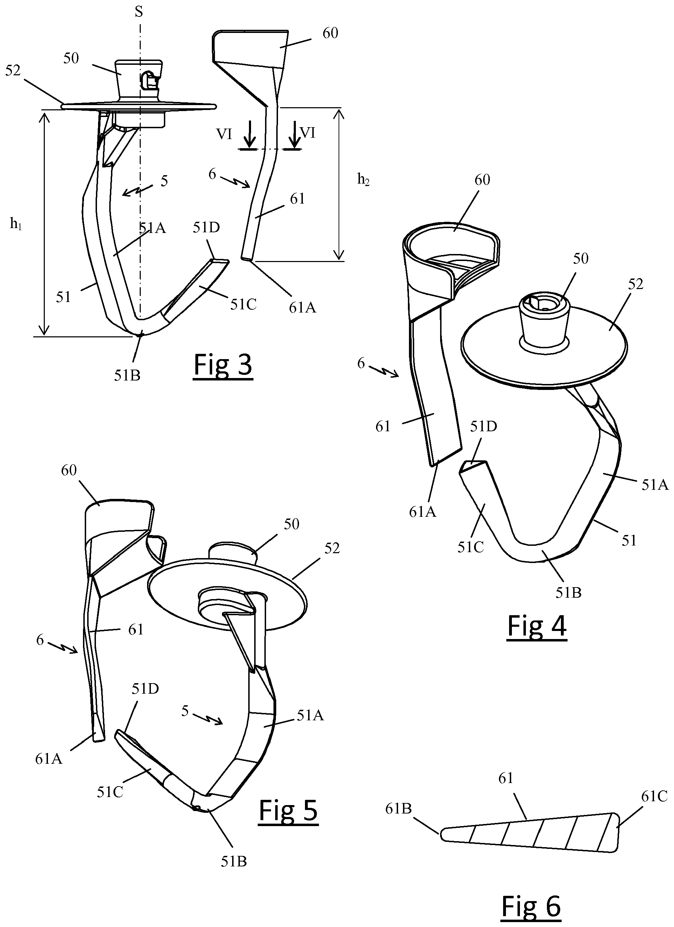

Conformément aux figures 3 à 5, le crochet 5 de pétrissage comporte une douille 50 permettant l'accouplement amovible du crochet 5 sur l'entraineur 40 et une branche de travail 51 destinée à venir plonger dans la cuve 2, la douille 50 et la branche de travail 51 étant séparées par un disque 52 s'étendant perpendiculairement à l'axe de rotation S du crochet 5 de pétrissage.

La branche de travail 51 du crochet comporte avantageusement une partie médiane 51A courbe reliant le disque 52 à une partie inférieure coudée 51B venant à proximité du fond 20 de la cuve 2, à une distance de l'ordre de 5 mm, lorsque le bras 3 est en position de travail, ainsi que cela est représenté sur les figures 1 et 2. La partie inférieure coudée 51B se prolonge par une partie relevée 51C s'étendant obliquement et comprenant une extrémité 51D remontant avantageusement sur plus de 20% de la hauteur h₁ de la branche de travail 51 selon l'axe S et préférentiellement sur près d'un tiers de la hauteur h₁ de la branche de travail 51.

A titre d'exemple, la branche de travail 51 du crochet présente une hauteur h₁ de l'ordre 13 cm et une partie relevée 51C faisant un angle de l'ordre 45° par rapport à l'axe de rotation S, l'extrémité 51D de la partie relevée 51C étant située 4,5 cm plus haut que l'extrémité inférieure de la partie inférieure coudée 51B du crochet 5.

Plus particulièrement selon l'invention, la branche de travail 61 du contre-outil 6 présente une hauteur h₂ au moins 20% plus faible que la hauteur h₁ de la branche de travail 51 du crochet 5 et comporte une extrémité inférieure 61A qui est disposée de telle sorte que l'extrémité 51D du crochet 5 occupe ponctuellement, à chaque tour du crochet 5 autour de l'axe S, un position dite de croisement, illustrée sur les figures 1, 3, 4 et 5, dans laquelle l'extrémité 51D du crochet 5 parvient à proximité de l'extrémité inférieure 61A du contre-outil 6 et de préférence à moins de 2 cm de cette dernière.

Comme on peut le voir sur la figure 3, l'extrémité inférieure 61A du contre-outil 6 est avantageusement située à la même hauteur que l'extrémité 51D du crochet 5, en étant décalée radialement vers l'extérieur par rapport à la trajectoire balayée par l'extrémité 51D du crochet pour éviter tout choc avec cette dernière.

La branche de travail 61 du contre-outil 6 présente avantageusement une section transversale allongée, représentée sur la figure 6, présentant un profil d'aile d'avion inversée avec un bord d'attaque 61B effilé et un bord de fuite 61C plus épais, un tel profil permettant d'obtenir un meilleur cisaillement de la pâte lors du croisement du crochet 5 et du contre-outil 6. A titre d'exemple, le contre outil 6 est réalisé en matériau plastique et la branche de travail s'étend sur une hauteur h₂ de l'ordre de 8,5 cm et comporte un bord d'attaque 61B présentant une largeur de l'ordre 2 mm et un bord de fuite 61C présentant une largeur de l'ordre de 6 mm.

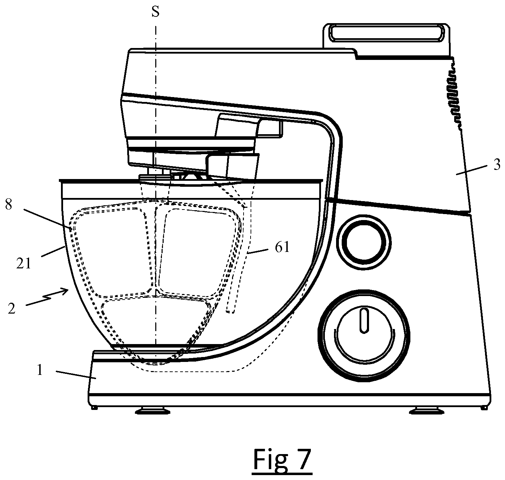

De manière préférentielle, la branche de travail 61 du contre-outil 6 présente une forme adaptée pour pouvoir être utilisée avec d'autres outils équipant habituellement les appareils de préparations culinaires, tels un outil mélangeur 8 illustré sur la figure 7, sans s'entrechoquer avec ces derniers. A cet effet, la branche de travail 61 présente une forme courbée vers l'intérieur de la cuve 2 qui, dans un plan passant par les axes S et P, s'étend sensiblement symétriquement à la paroi périphérique 21 de la cuve 2 par rapport à l'axe S.

L'appareil électroménager de préparation culinaire ainsi équipé présente l'avantage d'assurer un excellent pétrissage du pâton qui se forme progressivement autour de la partie relevée du crochet lors de la rotation de ce dernier selon un mouvement planétaire. En effet, à chaque tour du crochet sur lui-même, lors du passage de l'extrémité de la partie relevée à proximité de l'extrémité inférieure du contre-outil, le contre-outil vient cisailler et étirer le pâton et l'amène à se décrocher de la partie relevée du crochet pour tomber au fond de la cuve et être à nouveau malaxé par la partie inférieure courbée du crochet.

En particulier, un tel contre-outil présente l'avantage de ne pas venir à proximité du fond et de la paroi périphérique de la cuve, ce qui lui permet de ne pas participer au malaxe et au raclage des ingrédients présents dans le fond ou contre les parois du récipient. Il s'ensuit que les efforts générés par le travail du contre-outil sont moins élevés ce qui permet d'utiliser ce contre-outil avec un appareil équipé d'un moteur de plus faible puissance sans générer de surchauffe.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention tel que défini par les revendications.

Ainsi, dans une variante de réalisation, le contre-outil pourra être réalisé en matériau métallique.

Ainsi, dans une variante de réalisation non représentée, le contre-outil pourra comporter une extrémité inférieure qui se trouve décalée radialement à l'intérieur de la trajectoire balayée par l'extrémité du crochet.

## Revendications

1. Appareil électroménager de préparation culinaire comportant une cuve (2) comprenant un fond (20) surmonté d'une paroi périphérique (21) ouverte à son extrémité supérieure, un crochet (5) de pétrissage entrainé en rotation par un moteur selon un mouvement planétaire, le mouvement de rotation du crochet (5) étant composé d'une rotation du crochet (5) sur lui-même autour d'un axe S et d'un mouvement de rotation autour d'un axe P distinct de l'axe S et parallèle à l'axe S, et un contre-outil (6) fixé sur une platine (4) entrainée en rotation autour de l'axe P, le contre-outil (6) comportant une branche de travail (61) présentant une extrémité inférieure (61A) plongeant dans la cuve (2), ledit crochet (5) comportant une branche de travail (51) plongeant dans la cuve (2) comprenant une partie inférieure coudée (51B) venant à proximité du fond (20) de la cuve (2) et se prolongeant par une partie relevée (51C), la hauteur h₂ de la branche de travail (61) du contre-outil (6) étant au moins 20 % plus faible que la hauteur h₁ de la branche de travail (51) du crochet (5), **caractérisé en ce que** la partie relevée (51C) du crochet (5) comporte une extrémité (51D) occupant ponctuellement, à chaque tour du crochet (5) autour de son axe S, une position dite de croisement dans laquelle l'extrémité (51D) du crochet (5) parvient à moins de 2 cm de l'extrémité inférieure (61A) du contre-outil (6).

2. Appareil électroménager de préparation culinaire selon la revendication 1, **caractérisé en ce que** l'extrémité inférieure (61A) du contre-outil (6) est située sensiblement à hauteur de l'extrémité (51D) du crochet (5).

3. Appareil électroménager de préparation culinaire selon l'une quelconque des revendications 1 à 2, **caractérisé en ce que** la hauteur de la partie relevée (51C) du crochet (5) représente au moins 20 % de la hauteur h₁ de la branche de travail (51) du crochet (5).

4. Appareil électroménager de préparation culinaire selon l'une quelconque des revendications 1 à 3, **caractérisé en ce que** la branche de travail (61) du contre-outil (6) s'étend sensiblement verticalement depuis la platine (4) jusqu'à son extrémité inférieure (61A).

5. Appareil électroménager de préparation culinaire selon l'une quelconque des revendications 1 à 4, **caractérisé en ce que** l'extrémité inférieure (61A) du contre-outil (6) est décalée radialement par rapport à la trajectoire balayée par l'extrémité (51D) du crochet (5).

6. Appareil électroménager de préparation culinaire selon la revendication 5, **caractérisé en ce que** l'extrémité inférieure (61A) du contre-outil (6) se trouve à l'extérieur de la trajectoire balayée par l'extrémité (51D) du crochet (5).

7. Appareil électroménager de préparation culinaire selon l'une quelconque des revendications 1 à 6, **caractérisé en ce que** le contre-outil (6) est légèrement courbé vers l'intérieur de la cuve (2).

8. Appareil électroménager de préparation culinaire selon l'une quelconque des revendications 1 à 7, **caractérisé en ce que**, dans un plan passant par les axes S et P, la branche de travail (61) du contre-outil (6) s'étend sensiblement symétriquement à la paroi périphérique (21) de la cuve (2) par rapport audit axe S.

9. Appareil électroménager de préparation culinaire selon l'une quelconque des revendications 1 à 8, **caractérisé en ce que** le contre-outil (6) présente une section transversale allongée selon une direction perpendiculaire à la direction radiale de la cuve (2), ladite section transversale présentant un profil avec un bord d'attaque (61B) effilé et un bord de fuite (61C) épais.

## Patentansprüche

1. Elektrisches Haushaltsgerät für die kulinarische Zubereitung, aufweisend ein Gefäß (2), das einen Boden (20) umfasst, der von einer an ihrem oberen Ende offenen Umfangswand (21) überragt wird, einen Knethaken (5), der von einem Motor in einer Planetenbewegung in Rotation versetzt wird, wobei sich die Drehbewegung des Hakens (5) aus einer Drehung des Hakens (5) um sich selbst um eine Achse S und einer Drehbewegung um eine von der Achse S verschiedenen Achse P, die parallel zu der Achse S ist, zusammensetzt, und ein Gegenwerkzeug (6), das an einer sich um die Achse P in Drehung versetzte Platte (4) befestigt ist, wobei das Gegenwerkzeug (6) einen Arbeitsschenkel (61) aufweist, der ein unteres Ende (61A) vorweist, das in das Gefäß (2) eingetaucht ist, wobei der Haken (5) einen Arbeitsschenkel (51) aufweist, der in das Gefäß (2) eingetaucht ist und einen gebogenen unteren Teil (51B) aufweist, der nahe an den Boden (20) des Gefäßes (2) kommt und durch einen erhöhten Teil (51C) verlängert ist, wobei die Höhe h₂ des Arbeitsschenkels (61) des Gegenwerkzeugs (6) mindestens 20 % kleiner als die Höhe h₁ des Arbeitsschenkels (51) des Hakens (5) ist, **dadurch gekennzeichnet, dass** der erhöhte Teil (51C) des Hakens (5) ein Ende (51D) aufweist, das punktuell bei jeder Umdrehung des Hakens (5) um seine Achse S eine sogenannte Kreuzungsposition einnimmt, in der sich das Ende (51D) des Hakens (5) auf weniger als 2 cm von dem unteren Ende (61A) des Gegenwerkzeugs (6) annähert.

2. Elektrisches Haushaltsgerät zur kulinarischen Zubereitung nach Anspruch 1, **dadurch gekennzeichnet, dass** das untere Ende (61A) des Gegenwerkzeugs (6) im Wesentlichen auf Höhe des Endes (51D) des Hakens (5) liegt.

3. Elektrisches Haushaltsgerät zur kulinarischen Zubereitung nach einem der Ansprüche 1 bis 2, **dadurch gekennzeichnet, dass** die Höhe des erhöhten Teils (51C) des Hakens (5) mindestens 20 % der Höhe h₁ des Arbeitsschenkels (51) des Hakens (5) beträgt.

4. Elektrisches Haushaltsgerät zur kulinarischen Zubereitung nach einem der Ansprüche 1 bis 3, **dadurch gekennzeichnet, dass** der Arbeitsschenkel (61) des Gegenwerkzeugs (6) sich im Wesentlichen vertikal von der Platte (4) zu seinem unteren Ende (61A) erstreckt.

5. Elektrisches Haushaltsgerät zur kulinarischen Zubereitung nach einem der Ansprüche 1 bis 4, **dadurch gekennzeichnet, dass** das untere Ende (61A) des Gegenwerkzeugs (6) gegenüber dem vom Ende (51D) des Hakens (5) überstrichenen Weges radial versetzt ist.

6. Elektrisches Haushaltsgerät zur kulinarischen Zubereitung nach Anspruch 5, **dadurch gekennzeichnet, dass** das untere Ende (61A) des Gegenwerkzeugs (6) außerhalb des vom Ende (51D) des Hakens (5) überstrichenen Weges liegt.

7. Elektrisches Haushaltsgerät zur kulinarischen Zubereitung nach einem der Ansprüche 1 bis 6, **dadurch gekennzeichnet, dass** das Gegenwerkzeug (6) zur Innenseite des Gefäßes (2) hin leicht gewölbt ist.

8. Elektrisches Haushaltsgerät zur kulinarischen Zubereitung nach einem der Ansprüche 1 bis 7, **dadurch gekennzeichnet, dass** sich in einer Ebene, die durch die Achsen S und P verläuft, der Arbeitsschenkel (61) des Gegenwerkzeugs (6) im Wesentlichen symmetrisch zu der Umfangswand (21) des Gefäßes (2) in Bezug auf die Achse S erstreckt.

9. Elektrisches Haushaltsgerät zur kulinarischen Zubereitung nach einem der Ansprüche 1 bis 8, **dadurch gekennzeichnet, dass** das Gegenwerkzeug (6) einen länglichen Querschnitt in einer Richtung senkrecht zur radialen Richtung des Gefäßes (2) vorweist, wobei der Querschnitt ein Profil mit einer spitzen Vorderkante (61B) und einer dicken Hinterkante (61C) vorweist.

## Claims

1. Household electrical apparatus for preparing food comprising a container (2) comprising a bottom (20) surmounted by a peripheral wall (21) open at the upper end thereof, a kneading hook (5) driven in rotation by a motor according to a planetary movement, the rotation movement of the hook (5) being composed of a rotation of the hook (5) on itself about an axis S and a rotation movement about an axis P separate from the axis S and parallel to the axis S, and a counter tool (6) fixed on a plate (4) driven in rotation about the axis P, the counter tool (6) comprising a working branch (61) having a lower end (61A) immersed in the container (2), said hook (5) comprising a working branch (51) immersed in the container (2) comprising a lower curved portion (51B) coming into the proximity of the bottom (20) of the container (2) and being extended by a raised portion (51C), the height h₂ of the working branch (61) of the counter tool (6) being at least 20% lower than the height h₁ of the working branch (51) of the hook (5), **characterised in that** the raised portion (51C) of the hook (5) comprises an end (51D), intermittently occupying, at each rotation of the hook (5) about the axis S thereof, a position called intersection position wherein the end (51D) of the hook (5) reaches less than 2cm from the lower end (61A) of the counter tool (6).

2. Household electrical apparatus for preparing food according to claim 1, **characterised in that** the lower end (61A) of the counter tool (6) is located substantially at the height of the end (51D) of the hook (5).

3. Household electrical apparatus for preparing food according to any one of claims 1 to 2, **characterised in that** the height of the raised portion (51C) of the hook (5) represents at least 20% of the height h₁ of the working branch (51) of the hook (5).

4. Household electrical apparatus for preparing food according to any one of claims 1 to 3, **characterised in that** the working branch (61) of the counter tool (6) extends substantially vertically from the plate (4) to the lower end (61A) thereof.

5. Household electrical apparatus for preparing food according to any one of claims 1 to 4, **characterised in that** the lower end (61A) of the counter tool (6) is radially offset with respect to the path scanned by the end (51D) of the hook (5).

6. Household electrical apparatus for preparing food according to claim 5, **characterised in that** the lower end (61A) of the counter tool (6) is located outside of the path scanned by the end (51D) of the hook (5).

7. Household electrical apparatus for preparing food according to any one of claims 1 to 6, **characterised in that** the counter tool (6) is slightly curved towards the inside of the container (2).

8. Household electrical apparatus for preparing food according to any one of claims 1 to 7, **characterised in that**, in a plane passing through the axes S and P, the working branch (61) of the counter tool (6) extends substantially symmetrically to the peripheral wall (21) of the container (2) with respect to said axis S.

9. Household electrical apparatus for preparing food according to any one of claims 1 to 8, **characterised in that** the counter tool (6) has a transversal cross-section extended along a direction perpendicular to the radial direction of the container (2), said transversal cross-section having a profile with a tapered leading edge (61B) and a thick trailing edge (61C).
